# EUROPEAN PATENT APPLICATION

(11) **EP 1 739 577 A1**
(43) Date of publication of application: **03.01.2007**
(21) Application number: 06076106.1
(22) Date of filing: 24.05.2006
(51) Int. Cl.: G06F 17/30

(54) **Location based management system and method of fuel refilling**

(30) Priority: 08.06.2005 US 148080
(71) Applicant: Delphi Technologies, Inc., Troy, Michigan 48007 (US)
(72) Inventor: Baldwin, Ronald A., Cortland, OH 44410 (US)
(74) Representative: Denton, Michael John

(57) **Abstract**

A fuel refill system (10) is disclosed. The fuel refill system (10) includes a satellite (12) that provides location information from communication channels (25a-25d) to a microprocessor. The location information includes a location of a vehicle (14) and the locations of one or more fuel service providers (16a, 16b). A fuel refill communication method is also disclosed.

## Description

### TECHNICAL FIELD

The disclosure generally relates to the locating of a vehicle by a satellite. More specifically, the disclosure relates to locating a vehicle with a satellite for a the purposes of refueling the vehicle.

### BACKGROUND OF THE INVENTION

It is known that vehicle operators may drive their vehicles in rural or sparsely populated areas. Accordingly, when the vehicle's fuel supply is nearly spent, a fuel service provider may not be readily accessible to the vehicle operator to re-fuel the vehicle. Even further, fuel service providers that sell alternative fuels, such as, for example, hydrogen, may not be available in some moderately or even densely populated areas. Accordingly, the vehicle operator may try in vain to locate a fuel service provider that sells an alternative fuel. As such, a need exists to locate a vehicle relative the location of one or more fuel service providers such that the vehicle's fuel supply is not depleted between refueling. Even further, a need exists to locate and re-fuel a stalled vehicle in the event that the fuel supply of the vehicle becomes depleted.

### BRIEF DESCRIPTION OF THE DRAWINGS

The present invention will now be described, by way of example, with reference to the accompanying drawings, in which:
Figure 1 illustrates a fuel refill system according to an embodiment; and
Figure 2 illustrates an algorithm for operating the fuel refill system of Figure 1.

### DESCRIPTION OF THE PREFERRED EMBODIMENTS

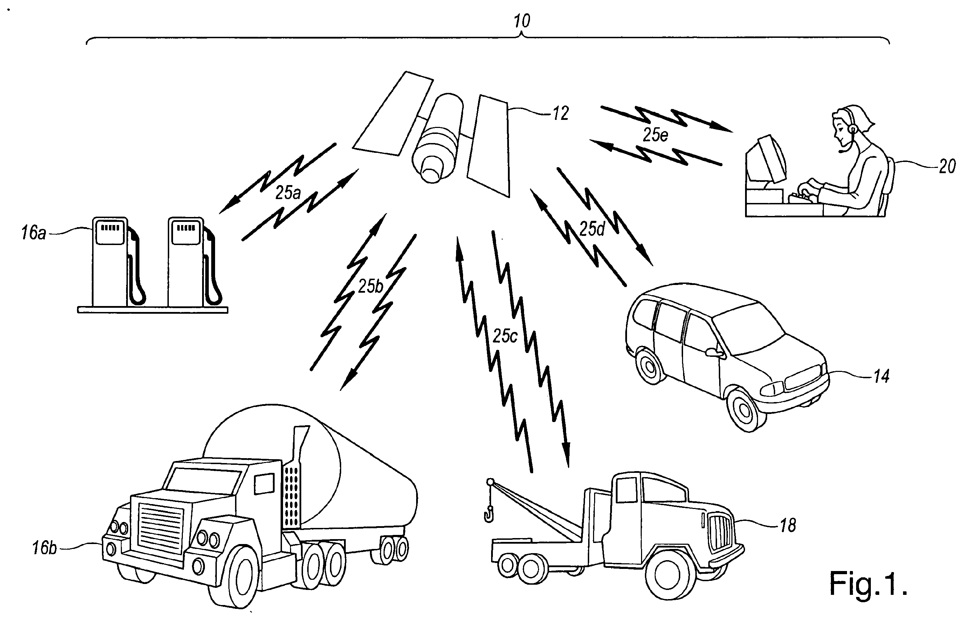

A fuel refill system is shown generally at 10 in Figure 1 according to an embodiment. The fuel refill system 10 includes a satellite 12, a vehicle 14, and one or more fuel service providers 16a, 16b. The fuel service provider, which is generally shown at 16a, is a fixed fuel service provider, which may be commonly referred to as a 'gas station,' and the fuel service provider, which is generally shown at 16b, is a mobile fuel service provider. Although two fuel service providers 16a, 16b are shown in Figure 1, it will be appreciated that any desirable number of fuel service providers 16a, 16b may be utilized in the fuel refill system 10.

As illustrated in Figure 1, the fuel service providers 16a, 16b and vehicle 14 each include a satellite communication channel 25a, 25b, and 25d, respectively, with the satellite 12. The satellite communication channels, which are generally shown at 25a and 25b, are satellite fuel service provider communication channels, and the satellite communication channel, which is generally shown at 25d, is a satellite vehicle communication channel. The satellite 12 enables the tracking of the location of the vehicle 14 relative the fixed or mobile location of the fuel service providers 16a, 16b using, for example, global positioning system (GPS) algorithms and associated circuitry that is equipped, respectively, on the vehicle 14 and at/on the fuel service providers 16a, 16b. As will be discussed below, the GPS algorithms may provide general direction (i.e. North, South, East, West) and/or detailed driving directions to the vehicle operator for locating the nearest available fuel service provider(s) 16a, 16b.

In addition to the relative location of the vehicle 14 and fuel service provider(s) 16a,16b, business information relating to the fuel service provider(s) 16a, 16b may be communicated directly from the fuel service provider(s) 16a, 16b to the satellite 12 via the communication channels 25a, 25b. The business information regarding the fuel service provider(s) 16a, 16b may include hours of operation (i.e. when the fuel service provider 16a, 16b is open for business), the types of fuel sold (i.e. gasoline, electric, hydrogen, diesel, methanol, ethanol, or the like), the brand of fuel sold (i.e. AMOCO®, EXXONMOBILE®, BP®, and the like), the availability of fuel (i.e. if fuel delivery means, such as pumps, are out of service, or, if fuel is sold out), and the like.

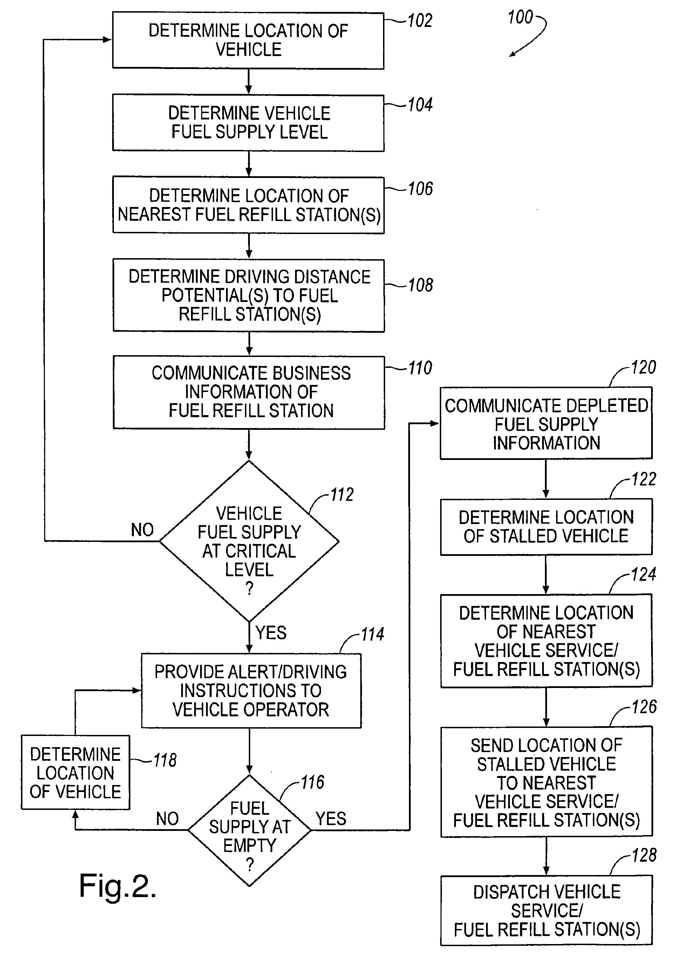

Referring to Figure 2, a flow chart algorithm for operating the fuel refill system is shown generally at 100. The algorithm of the flow chart 100 may be carried out by a microprocessor, or the like, that is located within the vehicle 14. However, it will be appreciated that the algorithm may be carried out by a microprocessor at a remote location from the vehicle 14 by communicating information pertinent to the operation of the algorithm 100 over any of the satellite communication channels 25a-25e to the location of the remotely-located microprocessor.

First, at step 102, location information of the vehicle 14 is communicated from the satellite 12 to the microprocessor. Then, at step 104, the microprocessor determines the fuel supply level of the vehicle 14, and, based upon the operating efficiency of the vehicle 14, a distance-to-empty value can be determined by the microprocessor. The determination at step 104 may be based upon an amount of fuel, driving efficiency (i.e. if the vehicle 14 is being driven on a highway or in a city environment), and the like. Because the microprocessor may be located in the vehicle 14, the microprocessor may directly obtain the fuel supply level from the vehicle 14; alternatively, if the microprocessor is remotely-located, the fuel supply information may be communicated from the vehicle 14 to the satellite 12 via the communication channel 25d and from the satellite 12 to the remote location of the microprocessor.

At step 106, fuel service provider(s) 16a, 16b are located by the satellite 12 and the location information of the fuel service provider(s) 16a, 16b is communicated to the microprocessor. Then, at step 108, driving distance potential(s) to the fuel service provider(s) 16a, 16b are determined by the microprocessor. The driving distance potentials are based upon the vehicle location information from step 102 and the location of the fuel service provider(s) 16a, 16b from step 106.

Optionally, at step 110, the fuel service provider(s) 16a, 16b may send the business information, as discussed above, to the satellite 12 over the communication channels 25a, 25b. Upon receiving the business information at the satellite 12, the business information is subsequently transmitted to the microprocessor. If the microprocessor is located in the vehicle 14, the business information may be communicated from the satellite 12 to the vehicle 14 over the communication channel 25d. Accordingly, the business information may be implemented for later utilization at step 112.

The information gathered at steps 102-110 permits the microprocessor to determine, at step 112, if the vehicle fuel supply is at, or nearing, a critical level. If the microprocessor determines that the fuel supply is not at, or nearing, a critical level, the algorithm 100 is returned from step 112 to step 102; however, if the microprocessor determines that the fuel supply has reached, or is nearing, a critical level, the algorithm 100 is advanced from step 112 to step 114. Once the algorithm 100 is advanced to step 114, the microprocessor may cause the signaling of a visual or audible fuel refill alert to the vehicle operator, or alternatively, the microprocessor may cause the signaling of driving instructions to the vehicle operator on a screen regarding the location of the nearest fuel service provider 16a, 16b so that the vehicle operator does not exhaust the vehicle's fuel supply.

According to an embodiment, the vehicle 14 may be traversing a rural interstate highway and the location of the vehicle 14 may be established at step 102. At step 104 the microprocessor may determine that the vehicle 14 has enough fuel supply to permit 100-miles of driving before completely depleting the fuel supply. Then, at step 106, the satellite 12 may determine the location of first, second, and third fixed fuel service providers 16a. For this example, it is assumed that the first, second, and third fixed fuel service providers 16a are located along the same driving direction of the vehicle; however, it will be appreciated, that the first, second, and third fixed fuel service providers 16a may be located on the opposite side (i.e. direction) of the highway. Accordingly, it is assumed that if fuel service providers are located on both sides of the highway, the GPS data will properly determine the accessibility of fuel service providers (i.e. if an exit ramp to the fuel service provider is or is not available). At step 108, the microprocessor determines that the relative distance between the vehicle 14 and the fuel service providers 16a, 16b are approximately 50-miles away, 75-miles away, and 125-miles away, respectively. Upon determining that one or more of the fuel stations are unreachable (based upon the miles-to-empty fuel supply calculation from step 104), the microprocessor may omit the information relating to the unreachable fuel service provider (i.e. the fuel service provider 125-miles away) while only considering the closest (reachable) fuel service providers (i.e. the fuel service providers 50- and 75-miles away). For example, if the determined fuel supply level from step 104 is at 100-miles-to-empty, the microprocessor may determine at step 112 that the vehicle fuel supply will reach a critical level when the fuel supply is reduced to approximately 50-miles-to-empty (i.e. approximately the location of the first service provider 50-miles away). Accordingly, the algorithm 100 may be continuously looped at steps 102-112 until the vehicle 14 is near the location of the first fuel service provider. Upon approaching the first fuel service provider, the algorithm 100 may be advanced to step 114 to warn the vehicle operator that the first and second fuel service providers are the last known fuel service providers within the vehicle's driving distance potential prior to the vehicle's fuel supply being depleted to empty. As such, the vehicle operator may be well-informed by the fuel refill system 10 to make a decision to stop for fuel at the first or second fuel service provider.

According to another embodiment (using the data from the example above), business information regarding the fuel service providers is provided to the microprocessor at step 110. For example, the business information may include the following: (a) the first fuel service provider may be open for business and fuel is available while (b) the second fuel service provider may be open for business, but sold out of fuel. Accordingly, because the second fuel service provider is sold out of fuel, step 112 may immediately exit the loop to step 114 to warn the vehicle operator that the first fuel service provider is the only known fuel service provider within the driving distance potential that may provide fuel prior to the vehicle fuel supply being depleted to empty. Accordingly, although the vehicle operator may have preferred to stop at the second fuel service provider as described in the first example, the vehicle operator may be warned at a substantially earlier time such that the vehicle operator should stop at the first fuel service provider since the second fuel service provider does not have any fuel to sell.

In the event that the vehicle operator is not aware of, or, inadvertently does not heed, the alert/driving instructions that are issued at step 114, the depletion status of the vehicle's fuel supply is monitored at step 116.

If the fuel supply is not depleted, the algorithm 100 is advanced from step 116 to step 118 to track the present location of the vehicle 14. After the location of the vehicle 14 is determined at step 118, the algorithm 100 is cycled back to step 114 to provide yet another alert to the vehicle operator. If desired, the noise level of the audible alert may be increased, or, a color / flashing pattern of the visual alert may be implemented to draw the vehicle operator's attention to the impending fuel depletion. Additionally, as the location of the vehicle 14 from step 118 is updated, the location of the vehicle 14 may be updated on the screen to illustrate to the vehicle operator where the nearest available fuel service provider is at relative the location of the vehicle 14 to constantly provide an updated alert to the vehicle operator.

If the vehicle's fuel supply becomes depleted, step 116 will advance the algorithm to steps 120 and 122 so that the satellite 12 may determine the location of the now stalled vehicle 14. To confirm that the vehicle 14 is indeed stalled (i.e. the vehicle 14 is not simply in park or stopped at a red traffic light), depleted fuel supply information may be communicated from the vehicle 14 over the communication channel 25d to the satellite 12 at step 120. Then, at step 122, the satellite 12 determines the location of the stalled vehicle 14.

At step 124, the satellite 12 will locate the nearest vehicle service station 18 (e.g., a tow-truck [Figure 1], a service station that dispatches tow-trucks, or the like) and/or the nearest fuel service provider 16a, 16b relative the stalled location of the vehicle 14. Then, at step 126, the location of the stalled vehicle 14 from step 122 may be sent directly to the nearest vehicle service station 18 and/or fuel service provider determined from step 124. The information sent to the vehicle service station 18 and/or fuel service provider 16a, 16b at step 126 may be transmitted directly from the satellite 12 over the communication channels 25a-25c.

In an alternative embodiment, the satellite 12 may send the stalled vehicle location information from step 122 directly to a third party service 20 (Figure 1) at step 126. Accordingly, the third party service 20 may dispatch, at step 128, the vehicle service station 18 and/or a mobile fuel service provider 16b to the location of the stalled vehicle. Accordingly, the satellite 12 may send information, such as a phone number, of the nearest vehicle service station 18 and/or fuel service provider determined from step 124 to the third party dispatching service 20 such that the third party dispatching service 20 may target and contact the nearest vehicle service station 18 and/or fuel service provider 16a, 16b.

If a direct, third party service 20 is not utilized, the dispatching at step 128 may be self-conducted by the vehicle service station 18 or mobile fuel service provider 16b by receiving the stalled vehicle information directly from the satellite 12 as described above. Accordingly, costs to operating the system 10 may be saved by eliminating a third party service 20. The direct communication of the stalled vehicle location from the satellite 12 may be initiated upon determining which vehicle service station 18 or mobile fuel service provider 16b is best suited to respond to the service call (i.e., if the vehicle service station 18 or mobile fuel service provider 16b is the closest to the stalled vehicle 14, open for business, etc.).

In another embodiment, if the stalled vehicle location information is made generally available in an indirect way (i.e., for example, on a secure / authorized-access internet-based bulletin board dispatching system), an element of competition may be instilled in the process such that the vehicle service stations 18 or mobile fuel service providers 16b may elect, at their earliest convenience, to respond to the service call of the stalled vehicle 14. For example, upon posting the location of the stalled vehicle 14 on the secure / authorized-access internet-based bulletin board, the first vehicle service stations 18 or mobile fuel service provider 16b may have incentive to arrive the earliest to the scene of the stalled vehicle location so that they may profit from the service if they are the first to service the stalled vehicle 14. The secure / authorized-access to the internet-based bulletin board may require patrons of the service (i.e., the vehicle service stations 18 or mobile fuel service provider 16b) to pass background check or other clearances such that crimes may not be perpetrated to a stranded motorist by a felon. Accordingly, it will be appreciated that the general availability 'in an indirect way' of this service may be restricted to a limited number of users who are authorized to utilize this embodiment.

Accordingly, the fuel refill system 10 provides information to the vehicle operator relating to the lack of a fuel service provider 16a, 16b in, for example, a rural environment, or, the lack of availability of an alternative fuel, such as, for example, hydrogen, at the fuel service provider 16a, 16b. As advances in fuel technology are achieved, fuel service providers that provide alternative fuels, such as hydrogen, may be scarcely populated. Therefore, the fuel refill system 10 provides a valuable service to the vehicle operator by locating alternative fuel re-fueling locations so that the vehicle 14 does not exhaust its fuel supply in mid-operation. Thus, a virtual safety net for vehicle operators is made available by the fuel refill system 10 that essentially reduces the likelihood of a situation where the vehicle 14 may strand a motorist. In the event that the vehicle 14 stalls as a result of running out of fuel, the fuel refill system 10 includes the provision of making the location of the stalled vehicle 14 available to nearby fuel service providers 16a, 16b, vehicle service stations 18, and/or a remote third party dispatching service 20 such that the vehicle operator is not stranded for a prolonged period of time.

The present invention has been described with reference to certain exemplary embodiments thereof. However, it will be readily apparent to those skilled in the art that it is possible to embody the invention in specific forms other than those of the exemplary embodiments described above. This may be done without departing from the spirit of the invention. The exemplary embodiments are merely illustrative and should not be considered restrictive in any way. The scope of the invention is defined by the appended claims and their equivalents, rather than by the preceding description.

## Claims

1. A fuel refill system (10), comprising:
a satellite (12) that provides location information received along two or more satellite communication channels (25a-25d) to a microprocessor, wherein the location information includes a location of a vehicle (14) and a location of one or more fuel service providers (16a, 16b), wherein the two or more satellite communication channels include a satellite vehicle communication channel (25d) and one or more satellite fuel service provider communication channels (25a, 25b).

2. The fuel refill system (10) according to Claim 1, wherein the microprocessor determines an amount of fuel in a fuel supply of the vehicle (14) and potential driving distances to the one or more fuel service providers (16a, 16b) based upon the location information provided to the microprocessor, wherein the microprocessor signals a warning if a re-fueling of the vehicle (14) should occur at the one or more fuel service providers (16a, 16b) based upon the amount of fuel and location information.

3. The fuel refill system (10) according to Claim 1, wherein the one or more fuel service providers (16a, 16b) provide business information to the satellite (12) for communication to the microprocessor.

4. The fuel refill system (10) according to Claim 3, wherein the business information includes hours of operation, types of fuel sold, brand of fuel sold, or availability of fuel.

5. The fuel refill system (10) according to Claim 4, wherein the types of fuel sold includes gasoline, electric, hydrogen, diesel, methanol, or ethanol.

6. The fuel refill system (10) according to Claim 4 wherein the availability of fuel includes fuel for sale, a lack of fuel for sale, or a service outage of fuel delivery means.

7. A fuel refill communication method (100), comprising the steps of:
determining (102) a location of a vehicle (14) with a satellite (12) over a vehicle communication channel (25d);
determining (106) a location of one or more fuel service providers (16a, 16b) with the satellite (12) over fuel service provider communication channels (25a, 25b); and
communicating the location of the vehicle (14) and the location of the one or more fuel service providers (16a, 16b) to a microprocessor.

8. The fuel refill communication method (100) according to Claim 7, further comprising the step of determining (104), with the microprocessor, an amount of fuel in a fuel supply of the vehicle (14).

9. The fuel refill communication method (100) according to Claim 8, further comprising the step of determining (108), with the microprocessor, potential driving distances of the vehicle (14) to the one or more fuel service providers (16a, 16b).

10. The fuel refill communication method (100) according to Claim 9, further comprising the step of communicating (110) business information of one or more of the fuel service providers (16a, 16b) to the satellite (12) for subsequent transmission to the microprocessor.

11. The fuel refill communication method (100) according to Claim 10, further comprising the step of determining (112), with the microprocessor, if the fuel supply is at a critical level based upon the determined location information of the vehicle (14) and one or more of the fuel service providers (16a, 16b), the amount of fuel, the potential driving distances, and/or the business information.

12. The fuel refill communication method (100) according to Claim 11, wherein, if the microprocessor determines that the fuel supply is at a critical level, the microprocessor causes the signaling (114) of a visual or audible fuel refill alert to a vehicle operator, or issues driving instructions to the vehicle operator to the location of a nearest one or more of the fuel service providers (16a, 16b).

13. The fuel refill communication method (100) according to Claim 8, further comprising the step of determining (116) if the fuel supply is depleted.

14. The fuel refill communication method (100) according to Claim 13, wherein, if the fuel supply is depleted, sending (120) depleted fuel supply information from the vehicle (14) to the satellite (12) and determining (122), with the satellite (12), a stalled location of the vehicle (14).

15. The fuel refill communication method (100) according to Claim 14, further comprising the step of locating (124), with the satellite (12), a nearest vehicle service station (18) and/or a nearest one or more of the fuel service provider (16a, 16b) relative the stalled location of the vehicle (14).

16. The fuel refill communication method (100) according to Claim 15, further comprising the step of sending (126), from the satellite (12), the stalled location of the vehicle (14) to the nearest vehicle service station (18), the nearest fuel service provider (16a, 16b), or a third party service (20).

17. The fuel refill communication method (100) according to Claim 16, further comprising the step of dispatching (128) the vehicle service station (18), or the nearest fuel service provider (16b).

18. The fuel refill communication method (100) according to Claim 17, wherein the dispatching step (128) is conducted by the third party service (20).

19. A fuel refill communication method (100), comprising the steps of:
determining (116) that a fuel supply of a vehicle (14) is depleted;
sending (120) depleted fuel supply information from the vehicle (14) to a satellite (12);
determining (122), with the satellite (12), a stalled location of the vehicle (14); and
sending (126), from the satellite (12), the stalled location of the vehicle (14) to a third party dispatching service (20).

20. The fuel refill communication method (100) according to Claim 19, further comprising the step of dispatching (128) a vehicle service station (18) or mobile fuel service provider (16b).
